# EUROPEAN PATENT SPECIFICATION

(11) **EP 2 626 611 B1**
(45) Date of publication and mention of the grant of the patent: **06.01.2016**
(21) Application number: 12154147.8
(22) Date of filing: 07.02.2012
(51) Int. Cl.: F16L 33/22, F16L 37/092

(54) **Coupling system for connecting a pressure tube to a valve body**
Kupplungssystem zur Verbindung eines Druckrohrs an einen Ventilkörper
Système de couplage pour connecter un tube de pression sur un corps de vanne

(43) Date of publication of application: 14.08.2013
(73) Proprietor: Iveco Magirus AG, 89079 Ulm (DE)
(72) Inventor: Leoka, Georg, 89075 Ulm (DE); Pohl, Harald, 89155 Erbach (DE)
(74) Representative: Franzolin, Luigi

(56) References cited:
- WO-A2-00/34092
- US-A- 5 230 539
- US-A- 5 681 061

## Description

The present invention refers to a coupling system for connecting a pressure tube to a valve body, according to the preamble of claim 1.

Pneumatic systems, like the brake systems of heavy vehicles and passenger cars, use fittings to connect the pressure conducts to valves that control the distribution of air within this system. Such valves can be, for example, direction control valves or check valves. To connect a pressure tube to a valve body, coupling systems are used that comprise a coupling member at one end of the pressure tube to be inserted into an opening in the valve body. The fitting of this coupling must be completely airtight so that there is no leakage of air at the coupling position. On the other hand, an easy handling of a coupling system is important. Inserting and fixing the coupling member shall be performed with low effort and without the danger of handling errors. It is to be noted that the above is not only valid for pneumatic systems but also for other pressurized systems, like, for example, connecting gas or water pressurized tubes to a valve block.

The known coupling systems use a screw fitting system to fix the coupling member within the opening. The coupling member at the end of the pressure tube comprises a male thread to be screwed into a female thread in a seat within the opening. It takes some effort and time to establish the connection by screwing the coupling member into the seat, and the pressure tightness of the connection depends on the torque acting on the coupling member to fit the different parts together. Under this aspect there is a certain danger of handling errors. Moreover, screw connections can disconnect under the influence of vibrations, and so this kind of coupling system is not completely fail safe. Another safety aspect is that the fitting should be temper proof to prevent any manipulation by unauthorized persons. In the known systems this temper proofness can only be achieved by additional securing means.

WO-A2-0034092 discloses in figure 5 a valve unit having a coupling system according to the preamble of claim 1, wherein an engagig portion is insertable in a bore of the valve and surrounds the pressure tube. Engaging portion elastically compresses in a radial inward direction behind a circumferential ridge of the bore and has radially inward teeth to bite the pressure tube. The coupling system further comprises a support sleeve insertable in the bore before the pressure tube and, in use, radially internal to the latter so that, in case of pulling, engaging portion is stopped by the ridge and cannot radially inwardly flex because of the sleeve, thus obtainning a secure fix of the pressure tube to the valve unit. The valve unit further comprises an o-ring surrounding the pressure tube. However the disclosure is silent about possible axial compression of the o-ring by the engaging portion when the pressure tube is axially mounted to the valve unit. Furthermore, after passing the ridge during mounting, engaging portion radially expands and contacts the inner surface of the bore so that the pressure tube is virtually undetachable from the valve unit.

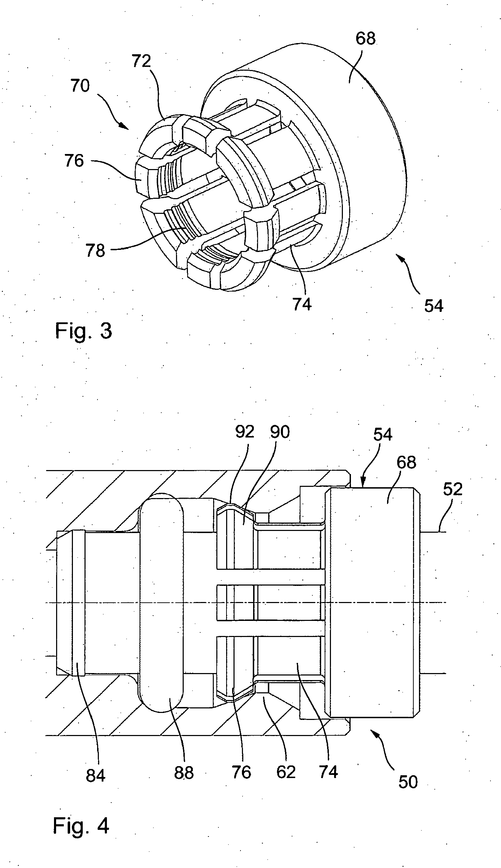

US5230539 discloses in figure 4 a coupling system to connect a valve unit with a pressure tube wherein an engagig portion is insertable in a bore and surrounds the pressure tube. Engaging portion elastically compresses in a radial inward direction behind a circumferential ridge of the bore and has radially inward teeth to bite the pressure tube. The coupling system further comprises a support sleeve insertable in the bore before the pressure tube and, in use, radially internal to the latter so that, in case of pulling, engaging portion is stopped by the ridge and cannot radially inwardly flex because of the sleeve thus obtainning a secure fix of the pressure tube. The coupling system further comprises an o-ring surrounding the pressure tube. However, in figure 4, it is evident that when the pressure tube is pulled in the coupling system during mounting, the engaging portion may be dragged by the tube to contact and axially press the o-ring such that the latter may be damaged during mounting. Therefore sealing properties of such a coupling system may be negatively impacted during mounting.

US5681061 discloses in figure 5 a coupling system having a structure that is described by the same features used above for US5230539. Therefore a similar disadvantage is present also in this coupling system of the prior art.

It is an object of the present invention to overcome the above mentioned disadvantages of known coupling sytems and to provide a coupling system that is easy and fast to handle, provides an improved fail safety and that is tamper proof, i. e. it cannot be manipulated by unauthorized persons. These objects are achieved by a coupling system comprising the features of claim 1.

A coupling system according to the present invention comprises, in addition to the features of the characterizing portion of claim 1, at least a coupling member with an outer retainer ring into which a pressure tube is inserted, so that the retainer ring bears on the outer surface of the pressure tube. This outer retainer ring is provided with an engaging portion that faces the end of the pressure tube. An inner support sleeve is inserted into the end of the pressure tube that extends axially at least up to the engaging portion, so that is supports the engaging portion from the inside. The engaging portion comprises engaging elements that are elastically compressible in a radial inward direction. In the received position of the coupling member these engaging elements engage behind a circumferential ridge protruding from the wall of the opening.

The connection of the pressure tube with a valve body is established as follows. First, the outer retainer ring is pressed into the opening so that the engaging elements are pushed against the circumferential ridge at the wall of the opening, and with a further movement of the outer retainer ring into the opening, they slide over the ridge to engage behind it. Afterwards the inner support sleeve is inserted into the outer retainer ring to be positioned within the opening, and the pressure tube is pushed onto the inner support sleeve so that it slides within the outer retainer ring until it reaches an end position. During this pushing movement, the outer surface of the pressure tube slides under the engaging elements.

In the end position of the pressure tube, the engaging elements rest on the outer surface of the pressure tube. When a pulling force acts on the pressure tube, the movement described above cannot easily be reversed. This is because the inner support sleeve prevents the engaging elements to be compressed in the inward direction so that they cannot slide over the ridge at the wall of the opening. Therefore the retainer ring is held within the opening, and the end portion of the pressure tube is clamped between the inner support sleeve and the engaging elements and cannot be pulled out. The end of the pressure tube can only be drawn out of the opening with the help of a special tool that is pushed between the outer surface of the tube and the inner surface of the retainer ring to dissolve the engaging elements from the surface of the tube, and prevents the tube from being clamped between the engaging elements and the inner support sleeve.

This is very simple and effective mechanism for a fast coupling system that allows an easy and fast connection between the pressure tube and the valve body. It does not require any screw connections and is very reliable even under the influence of vibrations. It is also temper proof because it allows a disconnection of the coupling parts only by use of a special tool to release the engaging elements from the surface of the pressure tube.

According to a preferred embodiment of the present invention, the engaging elements are provided as flexible tongues bearing on the outer surface of the pressure tube in an annular arrangement and comprising radial outer teeth at their ends to engage the ridge as well as radial inner teeth to engage the outer surface of the pressure tube. The inner teeth exert a clamping force onto the surface of the pressure tube when the ends of the flexible tongues are compressed. The flexible tongues can be formed together with the remaining portions of the retainer ring as one body. According to another preferred embodiment of the present invention, the outer teeth comprise bearing surfaces that are inclined outwardly towards the end of the pressure tube and provided to bear on corresponding inclined surfaces of the ridge.

Preferably the inner support sleeve comprises a stopping end portion with an enlarged diameter that abuts a step at the wall of the opening in the received position of the coupling member. This stopping end portion is stepped outwardly from the remaining portion of the inner support sleeve so that it faces the ring-shaped end surface of the pressure tube in the inserted position. The insertion depth of the pressure tube with the inserted support tube is delimited by the step at the wall of the opening.

More preferably a free end portion of the outer surface of the pressure tube remains between the engaging portion of the coupling member and the stopping end portion of the inner support sleeve.

According to a preferred embodiment of the present invention, a sealing ring bears on the free end portion for sealing the pressure tube against the wall of the opening.

According to a preferred embodiment of the present invention, the valve body is represented by the valve housing of a check valve, and the opening of the valve body is an inlet of this valve housing with respect to the direction of the flow through the check valve.

These and other aspects of the present invention will be apparent from and elucidated with reference to a preferred embodiment described hereinafter.
- Fig. 1: is a schematic longitudinal section along the main axis of a valve body comprising a coupling system according to an embodiment of the present invention;
- Fig. 2: is an exploded view of the coupling system shown in Fig. 1;
- Fig. 3: is a perspective view of an outer retainer ring as a coupling member of the coupling system of Fig. 1 and 2;
- Fig. 4: is an enlarged view of the coupling system of Fig. 1;
- Fig. 5: is a detailed section through the coupling system according to the present embodiment shown in Fig. 1; and
- Fig. 6: shows the coupling system according to this embodiment of the present invention in use at a compressed air reservoir.

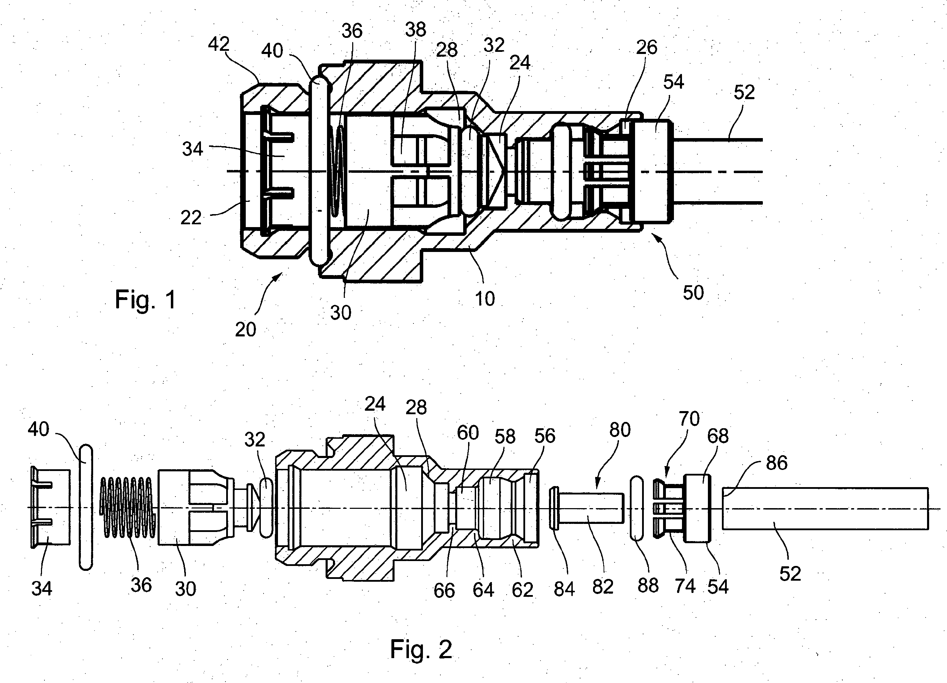

Fig. 1 shows a schematic section through a valve body 10 that represents a housing of a check valve 20. The operational parts that provide the check valve function are arranged in the left part of Fig. 1. On the left side of the valve body 10, an outlet opening 22 of an axial fluid channel 24 within the valve body 10 is disposed, while its inlet opening 26 is disposed at the opposite right side of the check valve 10 in Fig. 1. Pressurized air can flow through the inlet opening 26 and the fluid channel 24 towards the outlet opening 22. It is to be noted that the terms "inlet" and "outlet" refer to the flow direction within the check valve 20, i. e. the check valve 20 is opened by a high pressure acting from the inlet side so that the air can pass through, while the check valve 20 closes when a higher pressure acts on the left side in Fig. 1.

The fluid channel 24 comprises a check valve seat 28 with an enlarged inner diameter. Within the check valve seat 28, a piston 30 as the closing member of the check valve 20 is arranged. The piston 30 is moveable axially within the fluid channel 24 to open or to close the check valve seat 28. At the right end of the check valve seat 28, a seal ring 32 is arranged on the piston 30 to seal the piston 30 in air tight fashion against the check valve seat 28.

Within the outlet opening 22, a ring-shaped support member 34 is fixed. Between the support member 34 and the piston 30, a helical spring 36 is disposed so that the piston 30 can be elastically pushed against the fixed support member 34. Within the piston 30 a fluid channel 38 is disposed so that air can flow into circumferential openings on the piston 30 into the channel 38 towards the left open end of the piston 30 that faces the support member 34.

Without pressure acting via the inlet opening 26, the piston 30 is pushed by the elastic force of the spring 36 to close the check valve seat 28. This is also the case when an overpressure acts on the outlet opening 22, pressing the piston 30 further into its seat 28 so that the seal ring 32 closes the fluid channel 24. In this position the check valve 20 blocks the flow. However, air pressure acting through the inlet opening 26 can press the piston 30 out of its seat towards the support member 34 to compress the spring 36 so that a ring-shaped passage is opened between the seal ring 32 and the wall of the check valve seat 28, and the check valve 20 is opened.

The valve body 10 is provided to be inserted into the outer wall of an air pressure reservoir. For this purpose the left end of the valve body 10 is provided with a male thread 42 on its outer circumference, to be screwed into a corresponding female thread in the wall of the air reservoir. An outer seal ring 40 provides an airtight connection between the valve body 10 and the air reservoir.

The valve body 10 further comprises a coupling system 50 for connecting a pressure tube 52 to the valve body 10. This coupling system 50 comprises a coupling member 54 fitted on one end of the pressure tube 52 and provided to be received by the inlet opening 26. All parts of the coupling system 50 are shown in more detail in the exploded view in Fig. 2, as well as the parts of the check valve 20. In the present embodiment the pressure tube 52 is provided as a hose that is made of a relatively flexible material. However, it is to be noted that the present invention is not limited to flexible pressure tubes but can be applied to a broad range of the different tubes, including pressure hoses or tubes made out of a rigid material.

Fig. 2 also shows more details of the shape of the inner wall of the inlet opening 26, providing a seat for an engaging reception of the coupling member. In the order corresponding to the flow direction, the inlet opening 26 comprises an outer enlarged portion 56, an intermediate enlarged portion 58 with a smaller free diameter than the outer enlarged portion 56, and a reduced diameter portion 60 with a reduced inner diameter compared to the intermediate enlarged portion. The outer enlarged portion 56 and the intermediate enlarged portion 58 are divided by a circumferential ridge 62 with a trapezoid cross-section. The intermediate enlarged portion 58 and the reduced diameter portion 60 are divided by a step 64 in the wall of the inlet opening 26. At the transition to the check valve seat 28, the reduced diameter portion 60 comprises another step 66 further reducing the diameter of the fluid channel 24. This step 66 is formed by another circumferential ridge delimiting the smallest inner diameter of the flow channel 24.

Details of the coupling member 54 will be described in more detail with reference to Fig. 3. The coupling member 54 comprises an outer retainer ring 68 into which the pressure tube 52 is to be inserted. This means that the pressure tube 52 can be pushed into a central opening of the outer retainer ring 68 so that the outer retainer ring 68 bears on the outer surface of the pressure tube 52. The coupling member 54 further comprises an engaging portion 70 at its side facing the end of the pressure tube 52 with a plurality of engaging elements 72 that provide the engagement of the coupling member 54 within the opening 26.

Each engaging element 72 is formed as a flexible tongue 74 that extends axially from the retainer ring 68 in the flow direction, i. e. towards the end of the pressure tube 52 in the received position of the coupling member 54 within the inlet opening 26, as it is shown in Fig. 1 and 4, for example.

The tongues 74 are compressible in the radial direction of the retainer ring 68, i. e. they can be pressed against the outer surface of the pressure tube 52. At the end of each tongue 74 radial outer teeth 76 are provided that provide the engagement of the coupling member 54 to the wall of the inlet opening 26, as will be described further below. Moreover, radial inner teeth 78 are also provided at the ends of the tongues 74 that provide an engagement of the tongues 74 to the surface of the pressure tube 52 when the ends of the tongues 74 are compressed. In the compressed state of the tongues 74, a linear axial movement of the pressure tube 53 within the coupling member 54 is prevented. On the other hand, when the tongues 74 are released, the pressure tube 52 can be pushed through the coupling member 54.

In the present embodiment eight tongues 74 extend from the retainer ring 68 towards the end of the pressure tube 52, and a plurality of rows of inner teeth 78 is provided at the inner side of the tongues 74. However, the form of the inner teeth can be varied to provide a proper engagement of the ends of the tongues 74 on the surface of the pressure tube 52.

As can be taken from Fig. 2, the coupling system 50 further comprises an inner support sleeve 80 that is provided to be received by the free end of the pressure tube 52. The inner support sleeve 80 comprises a cylindrical insertion portion 82 to be inserted completely into the pressure tube 52, and a stopping end portion 84 with an enlarged outer diameter that is radially stepped outwards from the surface of the insertion portion 82. This stopping end portion 84 faces the ring shaped end surface 86 of the pressure tube 52 in the inserted state and forms a stopping element with its opposite side that faces the check valve 20 in the insertion direction of the pressure tube 52. Moreover, Fig. 2 shows another seal ring 88 to be inserted into the inlet opening 26 to provide an airtight fitting of the coupling system 50.

As will be described in the following, the coupling system 50 according to the present invention enables a fast and reliable connection between the pressure tube 52 and the valve body 10.

First, the seal ring 88 is positioned within the inlet opening 26 to abut the step 64 between the intermediate enlarged portion 58 and the reduced diameter portion 60. Its position can be taken from Fig. 1, 4 and 5. Afterwards, the coupling member 54 is inserted into the inlet opening 26. This is performed by pushing the coupling member 54 into the opening 26 so that the radial outer teeth 76 of the tongues 74 of the engaging portion 70 contact the ridge 62 at the wall of the opening 26, and the tongues 74 are slightly compressed when they slide over the ridge 62, because the outer diameter of the engaging portion 70 determined by the radial outer teeth 76 is greater than the free diameter within the opening 26 determined by the top of the ridge 62. After sliding over the ridge, the tongues 74 are elastically restored into their starting position. The coupling member 54 can be further pushed into the opening 26 until the retainer ring 68 is received completely by the outer enlarged portion 56, as it is shown in Fig. 1.

Before inserting a pressure tube 52 into the coupling member 54, the inner support sleeve 80 is inserted first into the opening 26 until the stopping end portion 84 of the inner support sleeve 80 abuts the step 66. Afterwards the end of the pressure tube 52 is pushed onto the insertion portion 82 of the support sleeve 80 axially through the retainer ring 68 so that the pressure tube 52 slides under the inner teeth 78 of the tongues 74 until the ring shaped end surface 86 of the pressure tube 52 abuts the stopping end portion 84. This sliding movement is possible because the tongues 74 do not exert a large pressure onto the surface of the pressure tube 52 in their position. Fig. 1 shows the end position of the pressure tube 52 within the opening 26, wherein the insertion portion 82 is completely received within the pressure tube 52.

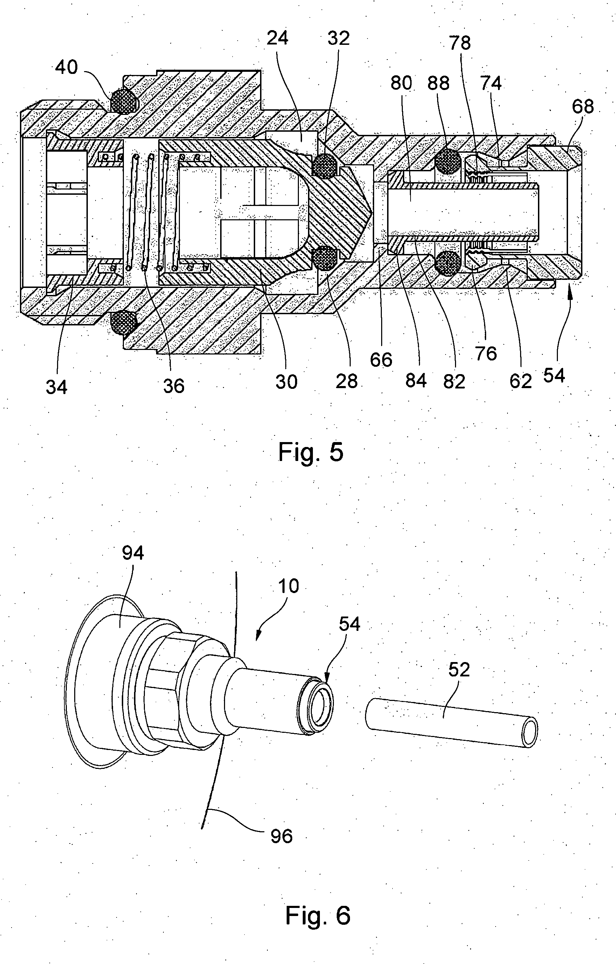

From the inserted state shown in Fig. 1, the pressure tube 52 cannot simply be decoupled from the valve body 10 by pulling the pressure tube 52 out of the opening 26. This is demonstrated in Fig. 4. When the coupling member 54 is moved out of the opening 26 with the pressure tube 52 and the inner support sleeve 80 inserted therein, the radial outer teeth 76 cannot pass the circumferential ridge 62 at the wall of the opening 26, because the inner support sleeve 80 supports the flexible tongues 74 from the inner side of the pressure tube 52. It can be taken from Fig. 5 that the insertion portion 82 extends from the end face 86 of the pressure tube 52 up to the engaging portion 70. This prevents the tongues 74 from being compressed when the inner support sleeve 80 is inserted into the end of the pressure tube 52. When the coupling member 54 is pulled out of the opening 26 together with the pressure tube 52, bearing surfaces 90 on the outer teeth 76 bear on corresponding inclined surfaces 92 on the ridge 62 at the wall of the opening 26. This can be clearly taken from Fig. 4. The bearing surfaces 90 as well as the corresponding inclined surfaces 92 of the ridge 62 are inclined outwardly towards the end 86 of the pressure tube 52.

The coupling member 54 can only be disengaged from the opening 26 by means of a special purpose tool, which is not shown in the figures. This tool is inserted between the outer surface of the pressure tube 52 and the ends of the tongues 74 by pushing the tool between the retainer ring 68 and pressure tube 52, so that the inner teeth 78 are released from the surface of the pressure tube 52. Afterwards the pressure tube 52 can be pulled out of the opening 26. The section view in Fig. 5 shows more details of the arrangement of the coupling system 50, with the coupling member 54 inserted into the opening 26 and the inner teeth 78 facing radially inwards. The pressure tube 52 is omitted in this figure. However, it can be taken from Fig. 5 that the inner support sleeve 80 extends in the axial direction up to a position underneath the engaging portion 70, i. e. the end of the insertion portion 82 facing the pressure tube 52 is located within the engagement portion 70 and supports the flexible tongues 74 from the inside of the pressure tube 52. Fig. 6 shows the valve body 10 screwed into a fitting ring 94 that is fixed at the outside of an air pressure tank 96.

The fitting ring 94 is provided with a female thread on the inside into which the male thread 42 (see Fig. 1) at the end of the valve body can be screwed. Fig. 6 also shows a pressure tube 52 to be pushed into the retainer ring 68 of the coupling member 54, as described above, to establish the connection between the pressure tube 52 and the air tank 96. The present invention can be applied to different kinds of pneumatical components. For example, the valve body of the present invention can be mounted to other components than an air reservoir, as described herein. It is also noted that a coupling system according to the present invention can be applied to a valve housing of a check valve with the flow direction reversed, i. e. the opening 26 in the valve body 10 is not an inlet of the valve housing but represents an outlet opening, while the opposite opening 22 represents the inlet of the valve housing, while the piston 30 is reversed and is movable axially within the fluid channel to open the check valve seat 28 when a pressure acts through the opening 22. It is further noted that the present coupling system can be applied to other systems than pressurized air systems, for example, to liquid pressure systems with hydraulic components.

## Claims

1. Coupling system (50) for connecting a pressure tube (52) to a valve body (10),
comprising a coupling member (54) insertable at one end of the pressure tube (52) and engageable with an opening (26) in the valve body (10), the opening (26) comprising an outer enlarged portion (56), an intermediate enlarged portion (58) with a smaller free diameter than the outer enlarged portion (56), and a reduced diameter portion (60) with a reduced inner diameter compared to the intermediate enlarged portion (58), the intermediate enlarged portion (58) and the reduced diameter portion (60) being divided by a step (64) in the wall of the opening (26),
wherein the coupling member (54) comprises an outer retainer ring (68) into which the pressure tube (52) is suitable to be inserted and an engaging portion (70) at the retainer ring (68) facing towards the reduced diameter portion (60),
said coupling system (50) further comprising an inner support sleeve (80) insertable into the end of the pressure tube (52) and extending axially at least up to the engaging portion (70),
wherein the engaging portion (70) comprises engaging elements (72) that are elastically compressible in a radial inward direction and provided to engage behind a circumferential ridge (62) protruding from the wall of the opening (26) and
a sealing ring (88) completely insertable into the intermediate enlarged portion (58) of the opening (26) and adapted to abut against the step (64)
**characterized in that** the coupling member (54) is pushable into the opening until the outer retainer ring (68) is received completely by the outer enlarged portion (56), without the engaging elements (72) being in contact with the sealing ring (88) when the outer retainer ring (68) axially abuts inside the outer enlarged portion (56) and **in that** there is a radial clearance of the engaging portion (70) inside the intermediate enlarged portion (58) when the engaging portion (70) elastically restores after compression behind the circumferential ridge (62).

2. Coupling system according to claim 1, **characterized in that** the engaging elements (72) are provided as flexible tongues (74) bearing on the outer surface of the pressure tube (52) in an annular arrangement and comprising radial outer teeth (76) at their ends to engage the ridge (62) as well as radial inner teeth (78) to impress the outer surface of the pressure tube (52).

3. Coupling system according to claim 2, **characterized in that** the outer teeth (76) comprise bearing surfaces (90) that are inclined outwardly towards the end of the pressure tube (52) and provided to bear on corresponding inclined surfaces (92) of the ridge (62).

4. Coupling system according to one of the preceding claims, **characterized in that** the inner support sleeve (80) comprises a stopping end portion (84) with an enlarged diameter to abut a step (66) at the wall of the opening (26)

5. Coupling system according to claim 4, **characterized in that** a free end portion of the outer surface of the pressure tube (52) remains between the engaging portion (70) of the coupling member (54) and the stopping end portion (84) of the inner support sleeve (80).

6. Coupling system according to claim 5, **characterized in that** the sealing ring (88) is suitable to bear on the free end portion for sealing the pressure tube (52) against the wall of the opening (26).

7. Coupling system according to one of the preceding claims, **characterized in that** the valve body (10) is the valve housing of a check valve, and the opening in the valve body (10) is an inlet of this valve housing with respect to the direction of flow through the check valve.

## Patentansprüche

1. Kupplungssystem (50) zum Anschluss eines Druckrohrs (52) an einen Ventilkörper (10),
umfassend ein Kupplungselement (54), das in ein Ende des Druckrohrs (52) einführbar ist und mit einer Öffnung (26) in den Ventilkörper (10) in Eingriff zu bringen ist, welche Öffnung (26) einen äußeren erweiterten Bereich (56), einen mittleren erweiterten Bereich (58) mit einem kleineren freien Durchmesser als der äußere erweiterte Bereich (56) und einen Bereich (60) mit reduziertem Durchmesser aufweist, dessen innerer Durchmesser im Vergleich zu dem mittleren erweiterten Bereich (58) reduziert ist, wobei der mittlere erweiterte Bereich (58) und der Bereich (60) reduzierten Durchmessers durch eine Stufe (64) in der Wand der Öffnung (26) voneinander getrennt sind,
wobei das Kupplungselement (54) einen äußeren Haltering (68) umfasst, in welchen das Druckrohr (52) eingesetzt werden kann, sowie einen Eingriffsbereich (70) an den Haltering (68), der im Bereich (60) reduzierten Durchmessers zugewandt ist,
welches Kupplungssystem (50) ferner eine innere Lagermuffe (80) umfasst, die in das Ende des Druckrohrs (52) einsetzbar ist und sich axial zumindest bis zu dem Eingriffsbereich (70) erstreckt,
wobei der Eingriffsbereich (70) Eingriffselemente (72) umfasst, die elastisch in einer radial nach innen weisenden Richtung zusammendrückbar sind und dazu ausgebildet sind, hinter eine Umfangsrippe (62) zu greifen, die von der Wand der Öffnung (26) vorspringt,
und einen Dichtungsring (88), der vollständig in den mittleren erweiterten Bereich (58) der Öffnung (26) einsetzbar ist und dazu vorgesehen ist, gegen die Stufe (64) zu stoßen,
**dadurch gekennzeichnet, dass** das Kupplungselement (54) in die Öffnung eindrückbar ist, bis der äußere Haltering (68) vollständig von dem äußeren erweiterten Bereich (56) aufgenommen ist, ohne dass die Eingriffselemente (72) in Berührung mit dem Dichtungsring (88) geraten, wenn der äußere Haltering (68) axial innen gegen den äußeren erweiterten Bereich (56) anschlägt, und dass ein radialer Zwischenraum des Eingriffsbereichs (70) in dem mittleren erweiterten Bereich (58) verbleibt, wenn der Eingriffsbereich (70) sich elastisch nach der Kompression hinter der Umfangsrippe (62) zurückstellt.

2. Kupplungssystem gemäß Anspruch 1, **dadurch gekennzeichnet, dass** die Eingriffselemente (72) als flexible Zungen (74) ausgebildet sind, die auf der äußeren Oberfläche des Druckrohrs (52) in einer ringförmigen Anordnung aufliegen und radial äußere Zähne (76) an ihren Enden aufweisen, um in die Rippe (62) einzugreifen, sowie radial innere Zähne (78) zum Eindrücken der äußeren Oberfläche des Druckrohrs (52).

3. Kupplungssystem gemäß Anspruch 2, **dadurch gekennzeichnet, dass** die äußeren Zähne (76) Stützflächen (90) aufweisen, die nach außen in Richtung des Endes des Druckrohrs (52) geneigt sind und dazu entsprechend geneigte Flächen (92) der Rippe (62) aufzunehmen.

4. Kupplungssystem gemäß einem der vorhergehenden Ansprüche, **dadurch gekennzeichnet, dass** die innere Lagermuffe (80) einen Endanschlagsbereich (84) mit einem erweiterten Durchmesser aufweist, um gegen eine Stufe (66) an der Wand der Öffnung (26) anzuschlagen.

5. Kupplungssystem gemäß Anspruch 4, **dadurch gekennzeichnet, dass** ein freier Endbereich der äußeren Oberfläche des Druckrohrs (52) zwischen dem Eingriffsbereich (70) des Kupplungselements (54) und dem Endanschlagsbereich (84) der inneren Lagermuffe (80) verbleibt.

6. Kupplungssystem gemäß Anspruch 5, **dadurch gekennzeichnet, dass** der Dichtungsring (88) dazu geeignet ist, sich auf dem freien Endbereich zum Abdichten des Druckrohrs (52) gegen die Wand der Öffnung (26) abzustützen.

7. Kupplungssystem gemäß einem der vorhergehenden Ansprüche, **dadurch gekennzeichnet, dass** der Ventilkörper (10) das Ventilgehäuse eines Rückschlagventils ist und die Öffnung in den Ventilkörper (10) ein Einlass dieses Ventilgehäuses bezüglich der Strömungsrichtung durch das Rückschlagventil ist.

## Revendications

1. Système de couplage (50) destiné à raccorder une conduite de pression (52) à un corps de soupape (10),
comprenant un organe de couplage (54) pouvant être inséré à une extrémité de la conduite de pression (52) et pouvant être enclenché avec une ouverture (26) dans le corps de soupape (10), l'ouverture (26) comprenant une portion agrandie externe (56), une portion agrandie intermédiaire (58) ayant un diamètre libre plus petit que la portion agrandie externe (56), et une portion de diamètre réduit (60) ayant un diamètre interne réduit comparée à la portion agrandie intermédiaire (58), la portion agrandie intermédiaire (58) et la portion de diamètre réduit (60) étant divisées par un décrochement (64) dans la paroi de l'ouverture (26),
dans lequel l'organe de couplage (54) comprend une bague de retenue externe (68) dans laquelle la conduite de pression (52) est adaptée pour être insérée et une portion d'enclenchement (70) au niveau de la bague de retenue (68) orientée vers la portion de diamètre réduit (60),
ledit système de couplage (50) comprenant en outre un manchon de support interne (80) pouvant être inséré dans l'extrémité de la conduite de pression (52) et s'étendant axialement au moins jusqu'à la portion d'enclenchement (70),
dans lequel la portion d'enclenchement (70) comprend des éléments d'enclenchement (72) qui sont élastiquement compressibles dans une direction radiale vers l'intérieur et prévus pour s'enclencher derrière une nervure circonférentielle (62) faisant saillie à partir de la paroi de l'ouverture (26) et
une bague d'étanchéité (88) pouvant être complètement insérée dans la portion agrandie intermédiaire (58) de l'ouverture (26) et adaptée pour buter contre le décrochement (64)
**caractérisé en ce que** l'organe de couplage (54) peut être poussé dans l'ouverture jusqu'à ce que la bague de retenue externe (68) soit complètement reçue dans la portion agrandie externe (56), sans que les éléments d'enclenchement (72) soient en contact avec la bague d'étanchéité (88) lorsque la bague de retenue externe (68) bute axialement à l'intérieur de la portion agrandie externe (56) et **en ce qu'**il y a un jeu radial de la portion d'enclenchement (70) à l'intérieur de la portion agrandie intermédiaire (58) lorsque la portion d'enclenchement (70) se remet en place élastiquement après la compression derrière la nervure circonférentielle (62).

2. Système de couplage selon la revendication 1, **caractérisé en ce que** les éléments d'enclenchement (72) sont prévus sous la forme de languettes flexibles (74) s'appuyant sur la surface externe de la conduite de pression (52) dans un agencement annulaire et comprenant des dents externes radiales (76) à leurs extrémités pour enclencher la rainure (62) ainsi que des dents internes radiales (78) pour presser sur la surface externe de la conduite de pression (52).

3. Système de couplage selon la revendication 2, **caractérisé en ce que** les dents externes comprennent des surfaces d'appui (90) qui sont inclinées vers l'extérieur vers l'extrémité de la conduite de pression (52) et prévues pour s'appuyer sur des surfaces inclinées (92) correspondantes de la nervure (62).

4. Système de couplage selon l'une des revendications précédentes, **caractérisé en ce que** le manchon du support interne (80) comprend une portion d'extrémité de butée (84) ayant un diamètre agrandi pour buter contre un décrochement (66) au niveau de la paroi de l'ouverture (26).

5. Système de couplage selon la revendication 4, **caractérisé en ce qu'**une portion d'extrémité libre de la surface externe de la conduite de pression (52) reste entre la portion d'enclenchement (70) de l'organe de couplage (54) et la portion d'extrémité de butée (84) du manchon de support interne (80).

6. Système de couplage selon la revendication 5, **caractérisé en ce que** la bague d'étanchéité (88) est adaptée pour s'appuyer sur la portion d'extrémité libre afin de sceller la conduite de pression (52) contre la paroi de l'ouverture (26).

7. Système de couplage selon l'une des revendications précédentes, **caractérisé en ce que** le corps de soupape (10) est le logement de soupape d'une soupape de non-retour, et l'ouverture dans le corps de soupape (10) est une admission pour ce logement de soupape par rapport à la direction d'écoulement à travers la soupape de non-retour.
